# EUROPÄISCHE PATENTSCHRIFT

(11) **EP 3 140 334 B1**
(45) Veröffentlichungstag und Bekanntmachung des Hinweises auf die Patenterteilung: **03.08.2022**
(21) Anmeldenummer: 15719475.4
(22) Anmeldetag: 04.05.2015
(51) Int. Cl.: C08G 18/48, B29C 70/00, C08J 5/04, C08G 18/76, C08K 5/10, C08K 5/103, C08G 18/20, C08G 18/42, C08K 5/49, C08G 63/48

(54) **MEHRPHASIGE POLYURETHAN-ZUSAMMENSETZUNG MIT REDUZIERTER SCHAUMENTWICKLUNG**
MULTI-PHASE POLYURETHANE COMPOSITION HAVING REDUCED FOAM DEVELOPMENT
COMPOSITION DE POLYURÉTHANE À PHASES MULTIPLES À MOUSSAGE RÉDUIT

(30) Priorität: 05.05.2014 DE 102014208353
(43) Veröffentlichungstag der Anmeldung: 15.03.2017
(73) Patentinhaber: Henkel AG & Co. KGaA, 40589 Düsseldorf (DE)
(72) Erfinder: FERENCZ, Andreas, 40223 Düsseldorf (DE); LAMMERSCHOP, Olaf, 47802 Krefeld (DE); NIEGEMEIER, Andreas, 40235 Düsseldorf (DE)
(86) Internationale Anmeldenummer: PCT/EP2015/059645
(87) Internationale Veröffentlichungsnummer: WO 2015/169716

(56) Entgegenhaltungen:
- US-A1- 2004 034 113

## Beschreibung

Die vorliegende Erfindung betrifft eine Zwei-Komponenten-Polyurethan-Zusammensetzung aus mindestens einem Polyol, mindestens einem Polyisocyanat und mindestens einem Emulgator, wobei die Zusammensetzung nach dem Aushärten eine Phasentrennung zeigt. Des Weiteren betrifft die vorliegende Erfindung die Verwendung dieser Polyurethan-Zusammensetzung als Bindemittel zur Herstellung von Faserverbundwerkstoffen, ein Verfahren zur Herstellung dieser Faserverbundwerkstoffe, die Faserverbundwerkstoffe selbst als auch ihre Verwendung.

Faserverstärkte Verbundwerkstoffe sollen hohen mechanischen Belastungen standhalten. Dazu ist es notwendig, dass die eingesetzten Matrixharze nach dem Aushärten stabil mit den Fasermaterialien verbunden sind. Fehlstellen wirken sich negativ auf die mechanischen Eigenschaften der Formteile aus. Aus diesem Grund sind Lunker, Hohlstellen oder Blasen im Formteil zu vermeiden. Des Weiteren sollen sich die ausgehärteten Matrixharze durch eine hohe Bruchzähigkeit auszeichnen. Geeignete Matrixmaterialien auf Basis von Epoxidbindemitteln sind bekannt. Diese Systeme haben allerdings einige Nachteile. Beispielsweise ist ihre Reaktivität häufig sehr hoch, was zu einer erhöhten Wärmeentwicklung führen und die Eigenschaften des Werkstoffs beeinträchtigen kann. Es wurden daher auch alternative Bindemittel auf Basis von reaktiven Zwei-Komponenten-Polyurethan-Zusammensetzungen, sogenannten 2K-PU-Zusammensetzungen, entwickelt, die in der Regel keine derart ausgeprägte Wärmeentwicklung aufweisen.

Die WO 2013127732 A1 beschreibt eine Zwei-Komponenten-Polyurethan-Zusammensetzung enthaltend i) 10 bis 80 Gew.-% mindestens eines Polyols mit einem zahlenmittleren Molekulargewicht von 200 g/mol bis 3000 g/ mol, ii) 5 bis 60 Gew.-% mindestens eines aromatischen Polyisocyanats, iii) 0 bis 15 Gew.-% Additive, wobei die Zusammensetzung ein NCO:OH-Verhältnis von 2:1 bis 1:2 aufweist. Eine Polyurethan-Zusammensetzung mit einem Emulgator wird nicht offenbart.

Die WO 2013127734 A1 offenbart Zwei-Komponenten-Polyurethan-Zusammensetzung enthaltend i) 10 bis 80 Gew.-% mindestens eines Polyols mit einem zahlenmittleren Molekulargewicht von 200 g/mol bis 3000 g/ mol, ii) 5 bis 70 Gew.-% mindestens eines Polyisocyanats, iii) 0 bis 10 Gew.-% eines Katalysators, wobei die Zusammensetzung ein NCO:OH-Verhältnis von 2:1 bis 1:2 aufweist. Eine Polyurethan-Zusammensetzung mit einem Emulgator wird nicht offenbart.

Die WO 2011/067246 A1 beschreibt Pultrusionsharzsysteme enthaltend (a) Di- oder Polyisocyanate, (b) Verbindungen mit mindestens zwei gegenüber Isocyanaten reaktiven Gruppen, (c) einen Katalysator, (d) eine höherfunktionelle Säure mit einem eine Funktionalität größer gleich 2 und gegebenenfalls (e) weitere Hilfs- und Zusatzstoffe. Die Beispiele offenbaren Zusammensetzungen aus niedermolekularen Polyethertriolen und Diphenylmethandiisocyanat. Eine Polyurethan-Zusammensetzung mit einem Emulgator wird nicht offenbart.

US 2004/034113 stellt mittels Reaktionsspritzguss (RIM) hergestellte geschäumte Formteile bereit, die durch Reaktion einer Polyisocyanatkomponente mit einer Isocyanat-reaktiven Komponente in einer Form unter Verwendung eines Treibmittels gebildet werden.

Verfahren zur Herstellung von Faserverbundwerkstoffen unter Verwendung von 2K-PU-Zusammensetzungen sind bekannt. Üblicherweise werden dabei Fasermaterialien in geschlossene Formen gelegt und im Anschluss mit der 2K-PU-Zusammensetzung als Matrixharz umhüllt. Das kann durch verschiedene Verfahren, wie beispielsweise durch Anlegen von Druck, Erhöhung der Temperatur oder Anlegen von Vakuum, unterstützt werden. Es hat sich dabei als vorteilhaft erwiesen, niedrigviskose Materialien einzusetzen, um Fehlstellen durch Blasenbildung zu verringern. Die Polyurethanzusammensetzung umfließt so leichter die Fasern, so dass Lufteinschlüsse verringert werden können. Das ist insbesondere dann von Vorteil, wenn der Faserverbundwerkstoff einen hohen Faseranteil aufweisen soll.

Allerdings wird im Laufe der Vernetzungsreaktion von 2K-PU-Zusammensetzungen häufig eine Bildung von Blasen beobachtet, auch wenn niedrigviskose Zusammensetzungen eingesetzt und somit Lufteinschlüsse im Wesentlichen vermieden werden sollten. Es wird angenommen, dass die Blasenbildung durch Spuren von Wasser versursacht wird, welches auf der Oberfläche des Fasermaterials adsorbiert ist und bei Kontakt mit dem Matrixharz mit den dort enthaltenden Isocyanatgruppen unter Bildung von Kohlendioxid reagiert.

Es hat sich weiterhin gezeigt, dass hochvernetzte 2K-PU-Zusammensetzungen und entsprechende Faserverbundwerkstoffe häufig eine unzureichende Bruchzähigkeit aufweisen. Zudem ist die Betriebsfestigkeit oft nicht ausreichend, sodass es nach längerer mechanischer Beanspruchung zu einem Materialversagen kommen kann.

Zudem sollen sich die Formkörper aus Faserverbundwerkstoffen nach ihrer Herstellung leicht aus der Form lösen lassen. Um ein Verkleben der Form mit dem Formteil zu verhindern, wird in der Regel ein Trennmittel auf die Form aufgebracht. Um diesen zusätzlichen Arbeitsschritt seltener durchführen zu müssen oder um sogar gänzlich auf ihn verzichten zu können, werden zusätzlich oder alternativ interne Trennmittel eingesetzt. Diese werden dem Matrixharzes zugemischt. Es hat sich aber gezeigt, dass die internen Trennmittel häufig eine unzureichende Trennwirkung zeigen.

Es ergibt sich deswegen die Aufgabe, eine 2K-PU-Zusammensetzung bereitzustellen, die im vernetzten Zustand eine reduzierte Blasenbildung zeigt. Zudem soll die vernetzte Polyurethan-Zusammensetzung hohen mechanischen Belastungen des Faserverbundwerkstoffs standhalten. Schließlich soll sich ein aus einer 2K-PU-Zusammensetzung hergestellter Formkörper leicht aus der Form lösen lassen.

Es wurde nun überraschenderweise gefunden, dass sich diese Aufgabe durch eine aus einer Polyolkomponente und einer Polyisocyanatkomponente zusammengesetzte 2K-PU-Zusammensetzung lösen lässt, wobei diese Zusammensetzung einen Emulgator enthält, der nicht homogen mit dem verwendeten Polyol mischbar ist.

In einem ersten Aspekt betrifft die Erfindung daher eine Zwei-Komponenten-Polyurethan-Zusammensetzung, umfassend mindestens ein Polyol mit einem zahlenmittlere Molekulargewicht von bis zu 3000 g/mol, mindestens ein Polyisocyanat und mindestens einen Emulgator mit einem HLB-Wert nach Griffin von weniger als 10, wobei der Emulgator ein Reaktionsprodukt aus mindestens einem aliphatischen Polyol und mindestens einer aliphatischen Monocarbonsäure und/oder Dicarbonsäure ist, wobei die Zusammensetzung das mindestens eine Polyol und das mindestens eine Polyisocyanat in einem NCO:OH-Verhältnis von 2:1 bis 1:2 aufweist, und der Transmissionsgrad einer Mischung des mindestens einen Emulgators und des mindestens einen Polyols bei 860 nm weniger als 90% beträgt und wobei das mindestens eine Polyisocyanat eine Viskosität von weniger als 80 mPas, gemessen mit einem Brookfield-Viskosimeter RVT unter Verwendung einer Spindel Nr. 3 bei 25 °C und 50 UpM, aufweist und wobei 0,5 Mol-% bis 2,5 Mol-% der NCO-Gruppen des Polyisocyanats zu Carbodiimid- und/oder Uretonimingruppen umgesetzt sind

Ein weiterer Gegenstand der Erfindung ist die Verwendung einer solchen Polyurethan- Zusammensetzung zur Herstellung von Faserverbundwerkstoffen.

In einem weiteren Aspekt betrifft die Erfindung einen Faserverbundwerkstoff, der Fasern sowie die vernetzte Zwei-Komponenten-Polyurethan-Zusammensetzung umfasst.

Ein weiterer Erfindungsgegenstand ist die Verwendung des Faserverbundwerkstoffs als Automobilbauteil.

Schließlich richtet sich die Erfindung noch auf ein Verfahren zum Herstellen von Faserverbundwerkstoffen, bei dem zunächst eine Form mit Fasermaterialien befüllt wird, in diese Form anschließend die Zwei-Komponenten-Polyurethan-Zusammensetzung unter Druck und/oder Anlegen von Vakuum eingebracht wird und der Faserverbundwerkstoff bei einer Temperatur bis 140 °C, insbesondere von 80 bis 120 °C ausgehärtet wird.

Weitere bevorzugte Ausführungsformen sind in den abhängigen Ansprüchen beschrieben.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polyol" bedeutet somit beispielsweise mindestens eine Art von Polyol, das heißt dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, das heißt dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben, auf Massenanteile in Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

Die im vorliegenden Text angegebenen Molekulargewichte beziehen sich, soweit nicht anders angegeben, auf das zahlenmittlere Molekulargewicht (MN). Alle Molekulargewichtsangaben beziehen sich, soweit nicht anders angegeben ist, auf Werte, wie sie durch Gelpermeationschromatographie (GPC) gegen einen Polystyrolstandard gemäß der Norm DIN 55672-1:2007-08 erhältlich sind.

Die im vorliegenden Text angegebenen Hydroxylzahlen werden gemäß der Norm DIN 532402:2007-11 bestimmt, sofern nicht anders angegeben.

Unter der OH-Funktionalität wird im vorliegenden Text die mittlere Anzahl an Hydroxylgruppen pro Molekül verstanden. Die OH-Funktionalität lässt sich aus der Hydroxylzahl und dem zahlenmittleren Molekulargewicht berechnen.

Der NCO-Gehalt wird nach Spiegelberger gemäß der Norm DIN EN ISO 11909:2007-05 bestimmt.

Die im vorliegenden Text angegebenen Glasübergangstemperaturen werden mittels DSC gemäß der Norm DIN EN ISO 11357-1:2010-03 bestimmt

Der E-Modul wird gemäß der Norm DIN EN ISO 527 bestimmt.

Die erfindungsgemäße 2K-PU-Zusammensetzung umfasst eine Polyolkomponente und eine Polyisocyanatkomponente. Die Polyolkomponente umfasst dabei mindestens ein Polyol und gegebenenfalls weitere Bestandteile. Die Polyisocyanatkomponente umfasst mindestens ein Polyisocyanat und gegebenenfalls solche Bestandteile, die nicht mit NCO-Gruppen reagieren. Der Emulgator ist vorzugsweise in der Polyolkomponente enthalten. Alternativ oder zusätzlich kann er auch in der Polyisocyanatkomponente enthalten sein, sofern er nicht mit NCO-Gruppen reagiert.

Als Polyolkomponente können die üblichen dem Fachmann bekannten Polyolverbindungen eingesetzt werden. Bevorzugt soll das mindestens eine Polyol keine weiteren mit NCO-Gruppen reaktiven funktionellen Gruppen aufweisen, wie beispielsweise reaktive Aminogruppen oder Carboxylgruppen. Um eine hohe Vernetzungsdichte und damit verbesserte mechanische Eigenschaften der vernetzten 2K-PU-Zusammensetzung zu erreichen, werden bevorzugt Polyole mit einem niedrigen Molekulargewicht, einer hohen Hydroxylzahl und einer hohen OH-Funktionalität eingesetzt.

Das zahlenmittlere Molekulargewicht des mindestens einen Polyols beträgt erfindungsgemäß bis zu 3000 g/mol, bevorzugt bis zu 2000 g/mol, weiter bevorzugt bis zu 1000 g/mol, noch weiter bevorzugt bis zu 400 g/mol, insbesondere bevorzugt von 150 bis 400 g/mol. Die Hydroxylzahl des mindestens einen Polyols beträgt vorzugsweise mehr als 100 mg KOH/g, weiter bevorzugt mehr als 250 mg KOH/g, noch weiter bevorzugt mehr als 400 mg KOH/g, insbesondere bevorzugt von 500 bis 1200 mg KOH/g. Besonders geeignet sind Polyole mit 2 bis 10, bevorzugt mit 2 bis 6 OH-Gruppen pro Molekül. Es können Mischungen unterschiedlicher Polyole eingesetzt werden, soweit eine entsprechende mittlere OH-Funktionalität erhalten wird. Insbesondere bevorzugt ist eine mittlere OH-Funktionalität von mehr als 2,5, bevorzugt von 2,5 bis 8, weiter bevorzugt von 2,8 bis 6, insbesondere bevorzugt von 3 bis 5. Vorzugsweise handelt es sich bei dem mindestens einen Polyol um ein aliphatisches Polyol. In einem aliphatischen Polyol sind die Hydroxylgruppen an einem aliphatischen Kohlenstoffatom gebunden.

Bei den Polyolen kann es sich um solche handeln, die endständig, also an den Kettenenden, Hydroxylgruppen tragen. Es kann sich aber ebenso um Verbindungen handeln, bei denen die Hydroxylgruppen seitenständig über die Kette verteilt vorliegen. Bei den Hydroxylgruppen handelt es sich um solche, die mit Isocyanaten reagieren können, vorzugsweise sind primäre oder sekundäre Hydroxylgruppen geeignet, insbesondere bevorzugt primäre oder sekundäre aliphatische Hydroxylgruppen.

Beispiele für geeignete Polyole sind solche auf Basis von Polyethern, Polyalkylenen, Polyestern oder Polyurethanen, ohne darauf beschränkt zu sein.

Als Polyole sind beispielsweise flüssige Polyesterpolyole geeignet, die durch Kondensation von Di-bzw. Tricarbonsäuren, wie z.B. Adipinsäure, Sebacinsäure und Glutarsäure, mit niedermolekularen Diolen bzw. Triolen, wie z.B. Ethylenglykol, Propylenglykol, Diethylenglykol, Triethylenglykol, Dipropylenglykol, 1,4-Butandiol, 1,6-Hexandiol, Glycerin oder Trimethylolpropan, hergestellt werden können. Dem Fachmann sind solche OH-funktionellen Polyester bekannt und sie sind kommerziell erhältlich. Insbesondere sind Polyesterpolyole geeignet, die zwei oder drei endständige OH-Gruppen enthalten. Dabei weisen diese Polyesterpolyole vorzugsweise ein zahlenmittleres Molekulargewicht von bis zu 2000 g/mol, insbesondere von 500 bis 1000 g/mol auf.

Es können aber auch Polyesterpolyole oleochemischer Herkunft verwendet werden. Derartige Polyesterpolyole können beispielsweise durch vollständige Ringöffnung von epoxidierten Triglyceri-den eines Fettgemisches, das wenigstens teilweise olefinisch ungesättigte Fettsäuren enthält, mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Beispiele solcher Polyole sind Rizinusöl oder Dimerfettdiole. Diese oleochemischen Polyole haben vorzugsweise ein zahlenmittleres Molekulargewicht von 250 bis 2000 g/mol.

Weitere geeignete Polyesterpole sind Polycarbonatpolyole. Polycarbonate können beispielsweise durch Reaktion von Diolen, wie Propylenglykol, 1,4-Butandiol oder 1,6-Hexandiol, Diethylenglykol, Triethylenglykol oder Tetraethylenglykol oder Gemischen aus zwei oder mehr davon, mit Diarylcarbonaten, beispielsweise Diphenylcarbonat, oder Phosgen, erhalten werden.

Eine weitere Gruppe der erfindungsgemäß einzusetzenden Polyole sind Polylactone, beispielsweise Polyester auf der Basis von E-Caprolacton.

Auch sind solche Polyesterpolyole geeignet, die in der Molekülkette eine oder mehrere Urethangruppen enthalten.

Es können auch niedermolekulare Polyole eingesetzt werden. Unter niedermolekularen Polyolen sind solche Polyole zu verstehen, die nicht durch Polymerisation oder Oligomerisation hergestellt werden und aus 2 bis 30 Kohlenstoffatomen bestehen. Diese niedermolekularen Polyole weisen dabei vorzugsweise eine OH-Funktionalität von 2 bis 10, insbesondere bevorzugt von 2 bis 6 auf. Es kann sich dabei um die bekannten Polyole handeln, wie Ethylenglykol, Propandiol, 1,4-Butandiol, 1,5-Pentandiol, 1,6-Hexandiol, 1,7-Heptandiol, 1,8-Octandiol, 1,10-Decandiol, 1,12-Dodecandiol, Dimerfettalkohol, Glycerin, Hexantriol, Trimethylolpropan, Pentaerythrit oder Neopen-tylalkohol. Es können auch sogenannte Zuckeralkohole eingesetzt, wie beispielsweise Mannitol, Sorbitol oder Methylglykoside. Bei den besonders bevorzugten niedermolekularen Alkoholen handelt es sich um lineare Alkohole mit einem zahlenmittleren Molekulargewicht von 60 bis 400 g/mol und zwei bis vier OH-Gruppen.

Polyetherpolyole und ihre Mischungen sind die im Rahmen der Erfindung besonders bevorzugten Polyole. Bei den Polyetherpolyolen handelt es sich um Umsetzungsprodukte von niedermolekularen, polyfunktionellen Alkoholen mit Alkylenoxiden. Die Alkylenoxide weisen vorzugsweise 2 bis 4 C-Atome auf. Es kann sich dabei um zwei- oder höherfunktionelle Polyole handeln, bevorzugt sind Polyole mit 2, 3 oder 4 OH-Gruppen. Beispiele sind Ethylenglykol, Propandiol, Butandiol, Hexandiol, Octandiol; polyfunktionelle Alkohole, wie Glycerin, Hexantriol, Trimethylolpropan, Pentaerythrit, Neopentylalkohol; Zuckeralkohole, wie Mannitol, Sorbitol, Methylglykoside. Auch entsprechende aromatische Polyole wie Resorcin, Hydrochinon, 1,2,2- oder 1,1,2-Tris-(hydroxyphenyl)-ethan können mit den Alkylenoxiden umgesetzt werden. Weitere, im Rahmen der Erfindung geeignete, Polyole entstehen durch Polymerisation von Tetrahydrofuran. Es können statistische und/oder Block-copolymere des Ethylenoxids und Propylenoxids eingesetzt werden. Polyetherpolyole mit 2, 3 oder 4 OH-Gruppen sind bevorzugt. Die Polyetherpolyole werden in einer dem Fachmann bekannten Weise hergestellt und sind kommerziell erhältlich. Insbesondere bevorzugt sind Polyoxyethylen- oder Polyoxypropylentriole. Das zahlenmittlere Molekulargewicht dieser Polyetherpolyole beträgt dabei vorzugsweise von 170 bis zu 3000 g/mol, insbesondere bevorzugt von 170 bis 1000 g/mol, am bevorzugtesten von 170 bis 350 g/mol.

In einer bevorzugten Ausführungsform besitzt das mindestens eine Polyol eine Viskosität von weniger 5000 mPas auf, insbesondere von 2700 bis 4000 mPas (DIN ISO 2555, Brookfield-Viskosimeter RVT, Spindel Nr. 4, 25 °C; 20 UpM). So kann die Polyurethanzusammensetzung die Fasern ohne Lufteinschlüsse umfließen.

Vorzugsweise sind in der Zusammensetzung keine Polyole enthalten, die tertiäre Aminogruppen aufweisen, da diese die Applikationseigenschaften verschlechtern.

Als Polyisocyanate in der Polyisocyanatkomponente sind Isocyanate mit zwei oder mehr Isocyanatgruppen geeignet. Vorzugsweise enthalten die Polyisocyanate 2 bis 5, vorzugsweise 2 bis 4 Isocyanatgruppen.

Als das mindestens eine Polyisocyanat der Polyisocyanatkomponente kann ein aromatisches Poly-isocyanat eingesetzt werden. In einem aromatischen Polyisocyanat sind die NCO-Gruppen an aromatischen Kohlenstoffatomen gebunden. Beispiele für geeignete aromatische Polyisocyanate sind 1,5-Naphthylendiisocyanat, 2,4'-, 2,2'- oder 4,4'-Diphenylmethandiisocyanat (MDI), Xylylen-diisocyanat (XDI), m- und p-Tetramethylxylylendiisocyanat (TMXDI), 2,4- oder 2,6-Toluylendiisocyanat (TDI), Di- und Tetraalkyldiphenyl-methandiisocyanat, 3,3'-Dimethyl-diphenyl- 4,4'-diisocyanat (TODI) 1,3-Phenylendiisocyanat, 1,4-Phenylendiisocyanat, 4,4'-Dibenzyldiisocyanat. Des Weiteren können auch die entsprechenden oligomeren Carbodiimid-, Uretonimin- oder Isocyanuratderivate eingesetzt werden als auch die höherfunktionellen Homologen, wie beispielsweise sogenanntes polymeres MDI (pMDI).

Die Polyisocyanatkomponente kann auch aliphatische Polyisocyanate enthalten. In einem aliphati-schen Polyisocyanat sind die NCO-Gruppen an aliphatischen Kohlenstoffatomen gebunden. Beispiele für geeignete aliphatische Polyisocyanate sind hydriertes MDI (H12MD1), 1-Methyl-2,4-diisocyanato-cyclohexan, 1,12-Diisocyanatododecan, 1,6-Diisocyanato-2,2,4-trimethylhexan, 1,6- Diisocyanato-2,4,4-trimethylhexan, 1-Isocyanatomethyl-3-isocyanato-1,5,5-trimethyl-cyclohexan (IPDI), Tetramethoxybutan-1,4-diisocyanat, Butan-1,4-diisocyanat, Hexan-1,6-diisocyanat (HDI), Dimerfettsäure-diisocyanat, Dicyclohexylmethandiisocyanat, Cyclohexan-1,4-diisocyanat, Ethylen-diisocyanat oder Phthalsäure-bis-isocyanatoethylester. Es können auch hier die entsprechenden Carbodiimid-, Uretonimin- oder Isocyanuratderivate eingesetzt werden.

Die Polyisocyanatkomponente kann auch Anteile von niedermolekularen Prepolymeren enthalten, beispielsweise Umsetzungsprodukte von MDI oder TDI mit niedermolekularen Diolen oder Triolen wie z.B. Ethylenglykol, Diethyenglykol, Propylenglykol, Dipropylenglykol, Triethylenglykol, Glyzerin oder Trimethylolpropan. Diese Prepolymere können durch Umsetzung eines Überschusses von monomerem Polyisocyanat in Gegenwart von Diolen der Triolen hergestellt werden. Dabei liegt das zahlenmittlere Molekulargewicht der Diole und Triole im Allgemeinen unterhalb von 1000 g/mol. Gegebenenfalls kann das Umsetzungsprodukt durch Destillation von monomeren aromatischen Isocyanaten befreit werden.

Vorzugsweise enthält die Polyisocyanatkomponente das mindestens eine Polyisocyanat in einer Menge von 5 bis 70 Gew.-%, weiter bevorzugt von 20 bis 70 Gew.-% bezogen, insbesondere bevorzugt von 40 bis 70 Gew.-% bezogen von auf das Gesamtgewicht der 2K-PU-Zusammensetzung.

Insbesondere bevorzugt handelt es sich bei dem mindestens einen Polyisocyanat um mindestens ein aromatisches Polyisocyanat. Besonders bevorzugt enthält die Polyisocyanatkomponente daher mindestens ein aromatisches Polyisocyanat in einer Menge von 5 bis 70 Gew.-%, weiter bevorzugt von 20 bis 70 Gew.-% bezogen, insbesondere bevorzugt von 40 bis 70 Gew.-% bezogen von auf das Gesamtgewicht der 2K-PU-Zusammensetzung.

Vorzugsweise weist das mindestens eine Polyisocyanat einen NCO-Gehalt von mehr als 25 Gew.-%, weiter bevorzugt mehr als 28 Gew.-%, besonders bevorzugt mehr als 30 Gew.-%, insbesondere bevorzugt von 30 bis 50 Gew.-%, bezogen auf das mindestens eine Polyisocyanat, auf. Der Massenanteil bezieht sich bei Verwendung nur eines Polyisocyanats auf die eingesetzte Menge dieses Polyisocyanats, bei Verwendung einer Mischung von Polyisocyanaten dagegen auf die eingesetzte Menge der Mischung dieser Polyisocyanate. Ein hoher NCO-Gehalt führt zu einer hohen Vernetzungsdichte und somit zu verbesserten mechanischen Eigenschaften.

Das Polyisocyanat hat eine Viskosität von weniger als 80 mPas, insbesondere von 30 bis 60 mPas (DIN ISO 2555, Brookfield-Viskosimeter RVT, Spindel Nr. 3, 25°C; 50 UpM). Dadurch kann die 2K-PU-Polyurethanzusammensetzung die Fasern leichter umfließen, sodass Lufteinschlüsse verringert werden.

Es ist insbesondere bevorzugt, dass das mindestens eine Polyisocyanat ein zahlenmittleres Molekulargewicht von weniger als 1500 g/mol, besonders bevorzugt weniger als 1000 g/mol aufweist.

Erfindungsgemäß sind von 0,5 Mol-% bis 2,5 Mol-% der NCO-Gruppen zu Carbodiimid- und/oder Uretonimingruppen umgesetzt. Diese Mischungen zeigen in der Regel eine besonders geeignete Viskosität.

Um stabile Zusammensetzungen zu erhalten, enthält die Polyisocyanatkomponente vorzugsweise keine Bestandteile, die zu Reaktionen führen können, welche eine Viskositätssteigerung unter Lagerbedingungen hervorrufen.

Eine erfindungsgemäße 2K-PU-Zusammensetzung enthält außerdem einen Emulgator. Der Emulgator wird vorzugsweise in Mengen von 0,2 bis 10 Gew.-%, bezogen auf das Gesamtgewicht der 2K-PU-Zusammensetzung eingesetzt, weiter bevorzugt von 0,5 bis 6 Gew.-%, insbesondere bevorzugt von 1 bis 3 Gew.-%.

Der Emulgator besitzt eine geeignete Oberflächenaktivität, so dass er in einer der Komponenten, vorzugsweise dem Polyol, gelöst oder dispergiert vorliegt. Spätestens durch Mischung der Polylol-komponente und der Polyiscoyanatkomponte und der anschließenden Vernetzungsreaktion tritt eine Phasenseparation auf. Dies kann beispielsweise durch eine geeignete Wahl der Hydrophilic-Lipophilic-Balance (HLB) und/oder der kritischen Mizellbildungskonstante (CMC) erreicht werden. Die Emulgatoren weisen einen HLB-Wert von weniger als 10, insbesondere weniger als 5 auf. Der HLB-Wert eines Emulgators wird dabei nach der Methode von Griffin bestimmt (W.C. Griffin, "Calculation of HLB Values of Non-Ionic Surfactants", Journal of the Society of Cosmetic Chemists 5 (1954): 249). Der HLB-Wert einer Emulgatormischung ist dabei der Mittelwert der mit dem Massenanteil gewichteten HLB-Werte der einzelnen Emulgatorkomponenten.

Erfindungsgemäß ist der mindestens eine Emulgator nicht homogen mit dem mindestens einen Polyol mischbar. Dies wird durch den folgenden Test überprüft: 100 g des mindestens einen Polyols und 2 g des mindestens einen Emulgators werden bei 25 °C mit einem Speedmixer (Modell DAC 600.1 VAC-P, 250 ml-Speedmixerdose) bei 2100 UpM für 2 min gerührt und die Mischung anschließend 5 min unter Rühren bei 800 UpM unter Vakuum entgast, dabei wird der Druck mittels einer Membranpumpe auf ungefähr 50 mbar reduziert. Dann ruht die Mischung 1 Min. Im Anschluss wird mittels UV/Vis-Spektroskopie der Transmissionsgrad elektromagnetischer Strahlung einer Wellenlänge von 860 nm bei einer Schichtdicke von 10 mm bezogen auf reines Polyol als Referenz bestimmt. Die Bestimmung erfolgt gemäß der Norm EN ISO 7027:1999. Beträgt der Transmissionsgrad der Mischung weniger als 90%, so ist der mindestens eine Emulgator mit dem mindestens einen Polyol im Sinne der Anmeldung "nicht homogen mischbar". Es ist bevorzugt, wenn der Transmissionsgrad weniger als 70 %, weiter bevorzugt weniger als 50 %, insbesondere weniger als 30% beträgt.

Es hat sich dabei überraschenderweise gezeigt, dass die vernetzten 2K-PU-Zusammensetzungen, die Emulgatoren enthalten, welche mit dem mindestens einen Polyol nicht homogen mischbar sind, eine deutlich verringerte Blasenbildung aufweisen, zudem deutlich verbesserte mechanische Eigenschaften zeigen und sich außerdem leichter aus der Form lösen lassen die entsprechenden vernetzten 2K-PU-Zusammensetzungen, die keine solchen Emulgatoren enthalten.

Es wird angenommen, dass aufgrund der Reaktion von Isocyanatgruppen mit Feuchtigkeit, insbesondere mit Spuren von Wasser in der Polyolkomponente oder auf den Fasern, Kohlendioxid gebildet wird, welches dann im Verlauf der Aushärtung und der damit verknüpften Reduktion des freien Volumens zusammen mit gegebenenfalls weiteren gelösten Gasen ausgetrieben wird und schließlich zur Bildung von Blasen und damit Fehlstellen führen kann. Dies ist häufig dann verstärkt zu beobachten, wenn besonders hydrophile Polyole eingesetzt werden oder die Isocyanat-Funktionalität besonders hoch gewählt. Es wird nun vermutet, dass durch den Einsatz von Emulgatoren, die nicht homogen mit dem Polyol mischbar sind, eine Phasentrennung erfolgt, die freies Volumen an der Phasengrenzfläche zur Verfügung stellt, sodass die die 2K-PU-Zusammensetzung eine höhere Aufnahmekapazität für gelöste Gase aufweist.

Außerdem zeigen sich bei Verwendung geeigneter Emulgatoren erhöhte kritische Spannungsintensitätsfaktoren (K1C). Der K1C-Wert ist dabei ein Maß für die Bruchzähigkeit des ausgehärteten Matrixharzes. Er gibt den kritischen Wert der Spannung für einen Rissfortschritt wieder. Der K1C-Wert wird gemäß der Norm ISO 13586:2000 mit Hilfe einer Zwick Z 020 als Prüfapparatur und einer Krafteinwirkung von 1 kN bestimmt.

Der Emulgator ist ein Reaktionsprodukt aus mindestens einem aliphatischem Polyol und mindestens einer aliphatischen Monocarbonsäure und/oder Dicarbonsäure. Das aliphatische Polyol hat vorzugsweise eine OH-Funktionalität von mindestens 4. Besonders geeignet ist Pentaerythrit. Als aliphatische Monocarbonsäure wird vorzugsweise Ölsäure eingesetzt. Als aliphatische Dicarbonsäure eignet sich insbesondere Adipinsäure und/oder eine Dimerfettsäure. Besonders bevorzugt ist ein Reaktionsprodukt aus Adipinsäure, Pentaerythrit und Ölsäure, sowie gegebenenfalls einer Dimerfettsäure. In einer anderen bevorzugten Ausführungsform ist der Emulgator ein mit Ölsäure vollverestertes Dipentaerythrit.

Es kann vorteilhaft sein, wenn der Emulgator freie Hydroxylgruppen trägt, die im Laufe der Vernetzungsreaktion mit dem Isocyanatgruppen reagieren können. Dadurch kann der Emulgator fest die Matrix eingebunden werden. Die erfindungsgemäßen 2K-PU-Zusammensetzungen können weiterhin Hilfsstoffe oder Additive enthalten, die vorzugsweise ganz oder teilweise der Polyolkomponente zugemischt werden. Unter Hilfsstoffen oder Additiven werden solche Stoffe verstanden, die in der Regel in kleinen Mengen zugesetzt werden, um die Eigenschaften der Zusammensetzung zu verändern, wie z.B. die Viskosität, das Benetzungsverhalten, die Stabilität, die Reaktionsgeschwindigkeit, die Blasenbildung, die Lagerfähigkeit oder die Haftung, und auch die Gebrauchseigenschaften dem Anwendungszweck anzupassen. Beispiele für Hilfsstoffe sind Verlaufsmittel, Netzmittel, Katalysatoren, Alterungs-schutzmittel, Farbstoffe, Trockenmittel, Harze und/oder Wachse.

Beispielsweise kann die erfindungsgemäße Zusammensetzung zusätzlich Stabilisatoren enthalten. Als Stabilisatoren im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Es können auch Katalysatoren eingesetzt werden. Als Katalysatoren werden die üblichen, in der Polyurethan-Chemie bekannten, metallorganischen Verbindungen eingesetzt, wie z.B. Eisen-, Titan-, Zirkon-, Aluminium-, Blei-, Wismut- oder auch insbesondere Zinn-Verbindungen. Bevorzugt ist es möglich, dass diese Katalysatoren als Mischung oder als Komplex im molaren Verhältnis von 0,25:1 bis 2:1 Polyhydroxyverbindungen enthalten, ausgewählt aus cyclischen a-Hydroxyketonen und/oder Triphenolen mit drei benachbarten OH-Gruppen. Insbesondere können als cyclische a-Hydroxyketone 5-, 6- oder 7-Ring-Verbindungen eingesetzt und als Triphenole 1-Alkyl-substituierte 2,3,4- oder 3,4,5-OH-Derivate verwendet werden. Es handelt sich dabei um Substanzen, die als Komplexbildner mit den oben erwähnten Metallatomen wirken. Dabei sollen diese Komplexbildner ein zahlenmittleres Molekulargewicht von weniger als 500 g/mol aufweisen. Die Komplexbildner können auch an einen Träger gebunden sein. Insbesondere sind solche Substanzen als Komplexbildner geeignet, die gegebenenfalls eine weitere OH- aufweisen. Damit kann bei der Vernetzungsreaktion dieser Komplexbildner auch mit der reaktiven Zusammensetzung reagieren und fest die Matrix eingebunden werden.

Eine andere Gruppe von Katalysatoren sind solche auf Basis von tertiären Aminen. Beispielsweise sind lineare oder cyclische aliphatische Amine geeignet, wie Methylcyclohexylamin, Dimethylbenzylamin, Tributylamin, Monoethanolamin, Triethanolamin, Diethylenetriamin, Triethylenetetramin, Triethylenediamin, Guanidin, Morpholin, N-methylmorpholin, Diazabicyclooctan (DABCO), 1,8-Diazabicyclo[5.4.0]undec-7-en (DBU) oder 1,5-Diazabicyclo[4.3.0]non-5-en (DBN) geeignet. Der Katalysator, kann in einer Menge von 0,01 bis etwa 5 Gew.-% bezogen auf das Gesamtgewicht der Zusammensetzung eingesetzt werden.

Die Wahl des geeigneten Katalysators wird durch seine Reaktivität als auch Stabilität bestimmt. Es wird einerseits eine hohe Lagerstabilität des üblicherweise in der Polyolkomponente enthaltenen Katalysators angestrebt. Andererseits sollte der Katalysator auch eine schnelle Vernetzungsreaktion ermöglichen. Dabei lässt sich üblicherweise eine einfache Relation zwischen dem Katalysator-gehalt und der Reaktivität feststellen, wonach die Vernetzungsreaktion umso schneller verläuft, je höher der Katalysatorgehalt ist. Es hat sich gezeigt, dass die oben genannten tertiären Amine besonders geeignete Katalysatoren darstellen, da sie sowohl eine hohe Reaktivität als auch eine hohe Lagerstabilität in der Polyolkomponente aufweisen.

Es ist auch möglich, dass geringe Mengen von Weichmachern, Farbpasten oder Molekularsieben enthalten sind. Als Trockenmittel können auch flüssige Verbindungen eingesetzt werden, die während der Lagerung Feuchtigkeit abfangen. Die Menge solcher Bestandteile soll aber unter 10 Gew.-% bezogen auf das Gesamtgewicht der 2K-PU-Zusammensetzung betragen. Bevorzugt sind keine Pigmente, Molekularsiebe, Füllstoffe und/oder Weichmacher enthalten. Die erfindungsgemäße Zusammensetzung soll bevorzugt keine organischen Lösemittel enthalten. Als Lösemittel sollen hier flüssige Substanzen mit einem Siedepunkt bei Normaldruck von unter 200 °C verstanden werden. Im Wesentlichen nicht flüchtige Verbindungen, die zum Dispergieren oder Lösen von Additiven eingesetzt werden, werden in dieser Hinsicht nicht als Lösemittel betrachtet.

Weiterhin können gegebenenfalls Harze enthalten sein. Dabei kann es sich um natürliche Harze oder um synthetische Harze handeln. Eine besondere Ausführungsform setzt hydroxylgruppenhaltige Harze ein, insbesondere Harze mit mehreren Hydroxylgruppen. Diese können mit den Isocyaten reagieren. In einer bevorzugten Ausführungsform kann die Menge bis zu 15 Gew.-% bezogen auf das Gesamtgewicht der 2K-PU-Zusammensetzung betragen. Werden hydroxylgruppenhaltige Harze eingesetzt, so nur als Bestandteil in der Polyolkomponente und nicht als Bestandteil der Polyisocyanatkomponente, da sonst die Viskosität der Polyisocyanatkomponente durch Reaktion des mindestens einen Polyisocyanats mit den Hydroxylgruppen des Harzes während der Lagerung zunehmen kann.

Die Additive werden so den Komponenten zugesetzt, dass eine ausreichende Lagerstabilität gegeben ist. In einer bevorzugten Ausführungsform werden keine Additive zugegeben, die eine Bildung von Gasblasen wie CO2 in der 2K-PU-Zusammensetzung fördern, wie beispielsweise mono- oder polyfunktionelle Carbonsäuren. Geringe Mengen an Carbonsäuren, wie sie gegebenenfalls durch den Emulgator eingebracht werden können, führen aber nicht zu einer Beeinträchtigung der Eigenschaften der 2K-PU-Zusammensetzung. Insbesondere wird als Additiv vorzugsweise kein Wasser zugegeben. Es können Spuren von Wasser in der Polyolkomponente enthalten sein, vorzugsweise ist sie aber frei von Wasser. Die 2K-PU-Zusammensetzung enthält vorzugsweise weniger als 0,5 Gew.-%, besonders bevorzugt weniger als 0,2 Gew.-% kein Wasser. Vorzugsweise ist die 2K-PU-Zusammensetzung im Wesentlichen wasserfrei.

Damit die 2K-PU-Polyurethanzusammensetzung die Fasern gut umfließen kann und so Lufteinschlüsse verringert werden, ist die 2K-PU-Zusammensetzung vorzugsweise niedrigviskos. Die Viskosität der gemischten 2K-PU-Zusammensetzung wird mit Hilfe eine Platte-Platte-Viskosimeters bestimmt (Plattendurchmesser = 25,0 mm; Spaltbreite = 0,800 mm, Testtyp: Dynamischer Zeits-weep; Frequenz = 1000.0 rad/s; Deformation = 10,0 %, Zeit pro Messung = 1 s). Vorzugsweise weist eine erfindungsgemäße 2K-PU-Zusammensetzung innerhalb von 2 Minuten nach dem Mischen, eine Viskosität von 20 bis 3000 mPas auf, gemessen bei einer Temperatur zwischen 20 und 60°C. Insbesondere bevorzugt ist eine Viskosität von 100 bis 1000 mPas betragen gemessen bei 20 bis 40°C. Dabei kann die erfindungsgemäße 2K-PU-Zusammensetzung bei diesen Temperaturen appliziert werden. Die Viskosität nimmt durch die einsetzende Vernetzungsreaktion sie langsam zu.

Die erfindungsgemäße 2K-PU-Zusammensetzung hat eine ausreichende Verarbeitungszeit. Diese beträgt vorzugsweise mindestens 10 Minuten. Unter der Verarbeitungszeit soll die Zeit verstanden werden, nach der die Viskosität einer Mischung bei 25°C auf mehr als 300 % des Ausgangswerts gestiegen ist, mindestens jedoch auf über 3000 mPas. Die Verarbeitungszeit kann durch die Auswahl der Isocyanate und der Katalysatoren beeinflusst werden.

Die 2K-PU-Zusammensetzung zeigt vorzugsweise bereits nach dem Mischen, spätestens aber nach dem Aushärten eine Phasentrennung. Dies ist durch Trübung der ausgehärteten Zusammensetzung festzustellen. Zur Beurteilung der Trübung wird der folgende Test durchgeführt.

Die Komponenten der Polyolkomponente werden bei 25 °C zusammengegeben und mit einem Speedmixer (Modell DAC 600.1 VAC-P, 250 ml-Speedmixerdose) bei 2100 UpM für 2 min gerührt. Die Mischung wird im Anschluss 5 min unter Rühren bei 800 UpM unter Vakuum entgast, dabei wird der Druck mittels einer Membranpumpe auf ungefähr 50 mbar reduziert. Die Polyisocyanatkomponente wird hinzugegeben und die 2K-PU-Zusammensetzung unter Vakuum zunächst 1 min bei 800 UpM, dann 30 s bei 1250 UpM und schließlich 20 s bei 150 UpM gerührt. Anschließend wird die 2K-PU-Zusammensetzung auf eine 90°C heiße Platte in eine 4 cm x 4 cm Form (4 mm Stärke) gegossen und 10 min ausgehärtet. Eine bevorzugte PU-Zusammensetzung ist nach dem Aushärten für das bloße Auge trüb, bildet also ein vernetztes Mehrphasensystem.

Durch die erfindungsgemäße Auswahl der Polyol- und der Isocyanatkomponente sowie des Emulgators wird eine hohe mechanische Stabilität der ausgehärteten Zusammensetzung erhalten. Bei den vernetzten Polyurethan-Zusammensetzungen handelt es sich erfindungsgemäß um Duroplaste (gemäß DIN 7708-1:1980-12). Somit wird eine hohe mechanische Stabilität sichergestellt. In einer bevorzugten Ausführungsform weist die vernetzte Zusammensetzung eine Glasübergangs-temperatur (TG) von über 60 °C auf, bevorzugt über 100 °C, insbesondere zwischen 100 °C bis 130°C. Durch die hohe Glasübergangstemperatur wird eine hohe mechanische Stabilität des ausgehärteten Verbundsystems ermöglicht. Die Strukturstabilität des Matrixwerkstoffs kann beispielsweise über den E-Modul gemessen werden. In einer bevorzugten Ausführungsform weist die vernetzte Zwei-Komponenten-Polyurethan-Zusammensetzung einen E-Modul von mehr als 1000 MPa, bevorzugt mehr als 2000 MPa, insbesondere mehr als 3000 MPa bei Temperaturen zwischen -10°C und + 70°C auf. Der K1C-Wert (Spannungsintensitätsfaktor) beträgt vorzugsweise mehr als 0,5 MPa m^{1/2}, insbesondere mehr als 1,0 MPa m^{1/2}.

Die erfindungsgemäßen 2K-PU-Zusammensetzungen sind als Matrixharz für Faserverbundwerk-stoffe geeignet. Dabei können diese in verschiedenen Anwendungsverfahren eingesetzt werden, beispielsweise im Resin-Transfer-Moulding-Verfahren (RTM-Verfahren) oder im Infusionsverfahren.

Als Faserbestandteile der Faserverbundwerkstoffe sind bekannte hochfeste Faserwerkstoffe geeignet. Diese können beispielsweise aus Glasfasern; synthetischen Fasern, wie Polyesterfasern, Polyethylenfasern, Polypropylenfasern, Polyamidfasern, Polyimidfasern oder Aramidfasern; Kohlenstofffasern; Borfasern; oxidischen oder nicht oxidischen Keramikfasern, wie Aluminiumoxid/Siliciumdioxidfasern, Siliciumcarbidfasern; Metallfasern, beispielsweise aus Stahl oder Aluminium; oder aus Naturfasern, wie Flachs, Hanf oder Jute bestehen. Diese Fasern können in Form von Matten, Geweben, Gewirken, Gelegen, Vliesen oder Rovings eingebracht werden. Es können auch zwei oder mehr dieser Fasermaterialien als Gemisch verwendet werden. Es können Kurzschnittfasern ausgewählt werden, bevorzugt werden jedoch synthetische Langfasern eingesetzt, insbesondere Gewebe und Gelege. Solche hochfesten Fasern, Gelege, Gewebe und Rovings sind dem Fachmann bekannt.

Insbesondere soll der Faserverbundwerkstoff Fasern in einem Volumenanteil von mehr als 40 Vol.-%, bevorzugt mehr als 50 Vol.-%, insbesondere bevorzugt zwischen 50 und 70 Vol.-% bezogen auf den gesamten Faserverbundwerkstoff enthalten, um besonders gute mechanische Eigenschaften zu erzielen. Im Falle von Kohlefasern wird der Volumenanteil gemäß der Norm DIN EN 2564:1998-08 bestimmt, im Falle von Glasfasern gemäß der Norm DIN EN ISO 1172:1998-12.

Ein solcher Faserverbundwerkstoff eignet sich insbesondere als Automobilbauteil. Solche Faserverbundwerkstoffe weisen gegenüber Stahl mehrere Vorteile auf, so sind sie leichter, zeichnen sich durch eine verbesserte Crash-Resistenz aus und sind außerdem langlebiger.

Ein weiterer Gegenstand der Erfindung ist ein Verfahren zum Herstellen von Faserverbundwerkstoffen. Dabei wird zunächst eine Form mit Fasermaterialien befüllt, in diese Form anschließend eine erfindungsgemäße Zwei-Komponenten-Polyurethan-Zusammensetzung unter Druck und/oder Anlegen von Vakuum, also Unterdruck, eingebracht und der Faserverbundwerkstoff bei einer Temperatur bis 140 °C, insbesondere von 80 bis 120 °C, ausgehärtet. Die Aushärtezeit beträgt weniger al 2 h, vorzugsweise weniger als 1 h, insbesondere weniger als 10 min, insbesondere weniger als 1 min. Danach kann der Faserverbundwerkstoff der Form entnommen werden. Zur Erreichung der Endeigenschaften kann eine Nachhärtung erfolgen (z.B. 1 h bei 150 °C).

In einer Ausführungsform des Verfahrens werden die Fasern in den Formen in vorgegebener Ausrichtung eingelegt. Die Menge der Fasermaterialien kann sehr hoch sein, insbesondere bevorzugt werden Faseranteile von über 40 Vol.-% bezogen auf den Faserverbundwerkstoff eingesetzt. Es können gegebenenfalls auch noch weitere Einlegeteile eingefügt werden. Danach wird die vorgemischte erfindungsgemäße Zusammensetzung eingebracht.

In den erfindungsgemäßen Verfahren wird die 2K-PU-Zusammensetzung unmittelbar nach dem Mischen eingesetzt. Da die gemischte Zusammensetzung reagiert, ist es zweckmäßig, nur die Menge der Komponenten zu mischen, die unmittelbar danach verarbeitet werden kann. Ebenso ist es möglich, kontinuierlich zu Mischen und die Formen zu befüllen. Da die 2K-PU-Zusammensetzung vorzugsweise in Form einer feinen Dispersion vorliegt, sind die Zusammensetzungen problemlos mit den üblichen Vorrichtungen, wie Pumpen, Düsen oder Schläuche zu verarbeiten. Unabhängig von einer Theorie kann angenommen werden, dass die Unverträglichkeit eine Verminderung der Reaktionsgeschwindigkeit bewirkt.

Das erfindungsgemäße Verfahren umfasst zwei Ausführungsformen. Das Anfließen kann durch Einspritzen unter Druck (Resin-Transfer-Molding- oder auch RTM-Verfahren), gegebenenfalls auch mit Unterstützen durch Vakuum oder Unterdruck, in kurzer Zeit durchgeführt werden. Dabei werden hier Zusammensetzungen bevorzugt, die eine kürzere Verarbeitungszeit aufweisen, danach aber eine schnelle Reaktion zeigen. Eine andere Ausführungsform füllt die Form durch Anlegen von Vakuum (Infusionsverfahren). In dieser Ausführungsform ist eine lange offene Zeit vorteilhaft. Die erfindungsgemäß geeignete Zusammensetzung ist vorzugsweise niedrigviskos. Die Viskosität steigt unter den Verfahrensbedingungen des Füllens nur gering an. Die Fließgeschwindigkeit wird so gewählt, dass Luft oder Gase zwischen den Fasermaterialien entweichen können.

In der Ausführungsform für Infusionsverfahren ist eine lange Verarbeitungszeit besonders wichtig. Deswegen werden in dieser Ausführung vorzugsweise Zusammensetzungen eingesetzt, die keine Katalysatoren enthalten. Das Anfließen an die Fasermaterialien, ein Verdrängen der Luftblasen und ein Befüllen der Form kann über einen längeren Zeitraum durchgeführt werden. Durch den langsamen Verlauf beziehungsweise Fortschritt der Reaktion können die Fasermaterialien vollständig in das Matrixmaterial eingebettet werden.

In der Ausführungsform als RTM-Verfahren muss eine Befüllung der Form in kurzer Zeit erfolgen. Dabei wird die Reaktionsmischung unter Druck in die Form gebracht. Durch die niedrige Anfangsviskosität kann ein schnelles Einbetten der Fasern sichergestellt werden. In dieser Ausführungsform enthalten die Zusammensetzungen bevorzugt auch Katalysatoren. Diese führen nach kurzer Zeit zu einer Beschleunigung der Reaktion, sodass eine schnelle Durchhärtung erfolgt. Das kann auch durch eine erhöhte Temperatur unterstützt werden. Dabei ist dann eine kurze Verweil-zeit in der Form möglich.

Nach dem Befüllen der Form beginnt die Zusammensetzung auszuhärten. Das kann ohne zusätzliche Wärmezufuhr geschehen. Die durch die Vernetzungsreaktion entstehende Reaktionswärme führt nicht zu einer örtlichen Überhitzung der Substrate. Um die Vernetzungsreaktion zu beschleunigen, ist es möglich, die gefüllte Form auf Temperaturen bis zu 140°C, insbesondere bevorzugt von 80 bis 120°C, zu erwärmen. Dabei wird eine schnellere Vernetzung des Matrixmaterials erreicht. Damit kann die Form früher von dem Formteil entfernt werden, sodass sie dann für weitere Arbeitsschritte zur Verfügung steht. Vorzugsweise liegt die Erwärmungstemperatur unterhalb der Glastemperatur der vernetzten 2K-PU-Zusammensetzung, insbesondere bevorzugt bei 10°C oder mehr.

Die nachfolgenden Beispiele erläutern die Erfindung.

### Beispiele

Rohstoffe:
1. Polyol: Polyethertriol, Hydroxylzahl = 550 mg KOH/g, Viskosität bei 25 °C = 1800 mPas (Brookfield 25°C, Spindel 4, 20 UPM), OH-Equivalentgewicht = 102 g, zahlenmittleres Molekulargewicht = 300 g/mol,
2. Polyisocyanat: Isomerengemisch von MDI und höherfunktionellen Homologen, NCO-Gehalt 32 Gew.-%, Viskosität bei 25 °C = 43 (Brookfield 25°C, Spindel 3, 50 UPM)
3. Katalysator: Lösung eines bicyclischen tertiären Amins (DABCO) in Polyol (30 Gew.-30% DABCO bezogen auf die Lösung)
4. Emulgator/Trennmittel:
   - Emulgator 1: tetrafunktionelles Polyol verestert mit einer Mischung aus einer difunktionellen Carbonsäure (C6) und einer ungesättigten Fettsäure (mittlere C-Kettenlänge 18)
   - Emulgator 2: Dipentaerythrit vollverestert mit Ölsäure.
   - Emulgator 3: Diester einer Dimerfettsäure mit verzweigten Alkoholen (mittlere Alkohol-Kettenlänge C8)
   - Dimerfettsäure
   - Polyoxyethylentridecyletherphosphat

Komponente A:
Polyol, Emulgator/Trennmittel und Katalysator wurden bei 25 °C zusammengegeben und mit einem Speedmixer (Modell DAC 600.1 VAC-P, 250 ml-Speedmixerdose) bei 2100 UpM für 2 min gerührt. Die Mischung wird im Anschluss 5 min unter Rühren bei 800 UpM unter Vakuum entgast, dabei wird der Druck mittels einer Membranpumpe auf ungefähr 50 mbar reduziert.

Komponente B:
Als Komponente B wird das Polyisocyanat eingesetzt.

2K-PU-Zusammensetzung:
Komponente A und Komponente B wurden gemischt und unter Vakuum zunächst 1 min bei 800 UpM, dann 30 s bei 1250 UpM und schließlich 20 s bei 150 UpM gerührt. Aus den Proben wurden direkt nach der Herstellung Probekörper (4 mm Stärke) gegossen und bei 95°C (45 min) und 130 °C (60 min) ausgehärtet.

Die Ergebnisse für unterschiedliche Emulgatoren sind in Tabelle 1 dargestellt. Die Trübung der Polyolmischung und der gehärteten 2K-PU-Zusammensetzung wurden wie oben beschrieben bestimmt.

Der K1C-Wert wird gemäß der Norm ISO 13586:2000 mit Hilfe einer Zwick Z 020 als Prüfapparatur und einer Krafteinwirkung von 1 kN bestimmt.

Zur Bestimmung der Trennwirkung wird eine 2K-PU-Zusammensetzung wie oben hergestellt, auf eine 90°C heiße Platte in eine 4 cm x 4 cm Form (4 mm Stärke) gegossen und 10 min ausgehärtet. Die Form wird anschließend entfernt, die Platte mit dem darauf haftenden Formkörper senkrecht aufgestellt und die Maximalkraft, die zu Abscherung erforderlich ist, mit einer Zwick Z 010 als Prüfapparatur bestimmt und in eine Spannung umgerechnet (Kraft/Fläche, wobei die Fläche 16 cm² beträgt).

**Tabelle 1**

| | | Beispiele | | | | Vergleich | | |
|---|---|---|---|---|---|---|---|---|
| | | 1 | 2a | 2b | 3 | 4 | 5 | 6 |
| Polyol [g] | | 42,5 | 42,51 | 42,31 | 42,51 | 42,5 | 42,5 | 42,5 |
| Polyisocyanat [g] | | 56,1 | 56,13 | 55,9 | 56,13 | 56,1 | 56,1 | 56,1 |
| Emulgator/ Trennmittel [g] | Emulgator 1 | 0,86 | | | | | | |
| | Emulgator 2 | | 0,86 | 1,29 | | | | |
| | Emulgator 3 | | | | 0,86 | | | |
| | Dimerfettsäure | | | | | | 0,86 | |
| | Polyoxyethylentridecyletherphosphat | | | | 0,86 | | | |
| Katalysator [g] | | 0,5 | 0,5 | 0,5 | 0,5 | 0,5 | 0,5 | 0,5 |
| Eigenschaftten der Polyolmischung mit Emulgator/Trennmittel | Trübung (nicht homogen mischbar, also Transmissionsgrad < 90%) | ja | ja | ja | ja | nein | nein | nein |
| Eigenschaften des ausgehärteten | Trübung | ja | ja | ja | ja | nein | nein | Nein |
| | Blasen | nein | nein | Nein | nein | ja | ja | Ja |
| | Trennwirkung [N/cm²] | 7,4 | 4,3 | 4,1 | 7,2 | 48 | 14,8 | 14,4 |
| Harzes ohne Fasern | K1C [MPa m^{1/2}] | 1,4 | 1,4 | 1,6 | 1,4 | 1,2 | | |

## Patentansprüche

1. Zwei-Komponenten-Polyurethan-Zusammensetzung zur Herstellung von Faserverbundwerkstoffen, umfassend
- mindestens ein Polyol mit einem zahlenmittleren Molekulargewicht von bis zu 3000 g/mol,
- mindestens ein Polyisocyanat und
- mindestens einen Emulgator mit einem HLB-Wert nach Griffin von weniger als 10, wobei der Emulgator ein Reaktionsprodukt aus mindestens einem aliphatischen Polyol und mindestens einer aliphatischen Monocarbonsäure und/oder Dicarbonsäure ist,
wobei die Zusammensetzung das mindestens eine Polyol und das mindestens eine Polyisocyanat in einem NCO:OH-Verhältnis von 2:1 bis 1:2 aufweist, und der Transmissionsgrad einer Mischung des mindestens einen Emulgators und des mindestens einen Polyols bei 860 nm weniger als 90% beträgt und wobei das mindestens eine Polyisocyanat eine Viskosität von weniger als 80 mPas, gemessen mit einem Brookfield-Viskosimeter RVT unter Verwendung einer Spindel Nr. 3 bei 25 °C und 50 UpM, aufweist und wobei
0,5 Mol-% bis 2,5 Mol-% der NCO-Gruppen des Polyisocyanats zu Carbodiimid- und/oder Uretonimingruppen umgesetzt sind.

2. Zwei-Komponenten-Polyurethan-Zusammensetzung zur Herstellung von Faserverbundwerkstoffen nach Anspruch 1, umfassend
- von 10 bis 80 Gew.-% des mindestens eines Polyols mit einem zahlenmittleren Molekulargewicht von bis zu 3000 g/mol,
- von 5 bis 70 Gew.-% des mindestens eines Polyisocyanats und
- von 0,2 bis 10 Gew.-% des mindestens eines Emulgators,
wobei sich die Massenanteile auf das Gesamtgewicht der Zwei-Komponenten-Polyurethan-Zusammensetzung beziehen.

3. Die Zwei-Komponenten-Polyurethan-Zusammensetzung nach einem der Ansprüche 1 bis 2, **dadurch gekennzeichnet, dass** der Emulgator einen HLB-Wert nach Griffin von weniger als 5 aufweist.

4. Die Zwei-Komponenten-Komponenten-Polyurethan-Zusammensetzung nach einem der Ansprüche 1 bis 3, **dadurch gekennzeichnet, dass** das mindestens eine Polyol ein zahlenmittleres Molekulargewicht von bis zu 1000 g/mol, bevorzugt bis zu 400 g/mol, insbesondere bevorzugt von 150 bis 400 g/mol aufweist.

5. Die Zwei-Komponenten-Polyurethan-Zusammensetzung nach einem der Ansprüche 1 bis 4, **dadurch gekennzeichnet, dass** das mindestens eine Polyol eine Hydroxylzahl von mehr als 100 mg KOH/g, bevorzugt mehr als 250 mg KOH/g, weiter bevorzugt mehr als 400 mg KOH/g, insbesondere bevorzugt von 500 bis 1200 mg KOH/g aufweist.

6. Die Zwei-Komponenten-Polyurethan-Zusammensetzung nach einem der Ansprüche 1 bis 5, **dadurch gekennzeichnet, dass** das mindestens eine Polyol eine mittlere OH-Funktionalität von mehr als 2,5, bevorzugt von 2,5 bis 8, weiter bevorzugt von 2,8 bis 6, insbesondere bevorzugt von 3 bis 5 aufweist.

7. Die Zwei-Komponenten-Polyurethan-Zusammensetzung nach einem der Ansprüche 1 bis 6, **dadurch gekennzeichnet, dass** das mindestens eine Polyol ein Polyetherpolyol oder eine Mischung von Polyetherpolyolen ist.

8. Verwendung einer Zwei-Komponenten-Polyurethan-Zusammensetzung nach einem der Ansprüche 1 bis 8 zur Herstellung von Faserverbundwerkstoffen.

9. Ein Faserverbundwerkstoff, **dadurch gekennzeichnet, dass** er Fasern sowie eine vernetzte Zwei-Komponenten-Polyurethan-Zusammensetzung nach einem der Ansprüche 1 bis 8 umfasst.

10. Der Faserverbundwerkstoff nach Anspruch 10, **dadurch gekennzeichnet, dass** die vernetzte Zwei-Komponenten-Polyurethan-Zusammensetzung ein Duroplast ist.

11. Der Faserverbundwerkstoff nach Anspruch 10 oder 11, **dadurch gekennzeichnet, dass** die vernetzte Zwei-Komponenten-Polyurethan-Zusammensetzung eine Glasübergangstemperatur T_{G} von über 60 °C, bevorzugt über 100 °C, insbesondere zwischen 100 °C bis 130°C aufweist, bestimmt mittels DSC nach DIN EN ISO 11357-1/2010-03.

12. Der Faserverbundwerkstoff nach einem der Ansprüche 10 bis 12, **dadurch gekennzeichnet, dass** die Fasern in einem Volumenanteil von mehr als 40 Vol.-%, bezogen auf den gesamten Faserverbundwerkstoff, enthalten sind.

13. Verwendung des Faserverbundwerkstoffs nach einem der Ansprüche 10 bis 13 als Automobilbauteil.

14. Verfahren zum Herstellen von Faserverbundwerkstoffen nach einem der Ansprüche 10 bis 13, **dadurch gekennzeichnet, dass** zunächst eine Form mit Fasermaterialien befüllt wird, in diese Form anschließend eine Zwei-Komponenten-Polyurethan-Zusammensetzung nach einem der Ansprüche 1 bis 12 unter Druck und/oder Anlegen von Vakuum eingebracht wird und der Faserverbundwerkstoff bei einer Temperatur bis 140 °C, insbesondere bevorzugt von 80 bis 120 °C, ausgehärtet wird.

## Claims

1. A two-component polyurethane composition for the production of fiber composite materials, comprising
- at least one polyol having a number-average molecular weight of up to 3000 g/mol,
- at least one polyisocyanate and
- at least one emulsifier having a HLB value, according to Griffin, of less than 10, wherein the emulsifier is a reaction product of at least one aliphatic polyol and at least one aliphatic monocarboxylic acid and/or dicarboxylic acid,
wherein the composition has the at least one polyol and the at least one polyisocyanate in an NCO:OH ratio of 2:1 to 1:2, and the transmittance of a mixture of the at least one emulsifier and the at least one polyol at 860 nm is less than 90%, and wherein the at least one polyisocyanate has a viscosity of less than 80 mPas, measured with a Brookfield viscometer RVT using a spindle no.3 at 25 °C and 50 rpm, and wherein
0.5 mol.% to 2.5 mol.% of the NCO groups of the polyisocyanate are reacted to form carbodiimide and/or uretonimine groups.

2. The two-component polyurethane composition for the production of fiber composite materials according to claim 1, comprising
- from 10 to 80 wt.% of the at least one polyol having a number-average molecular weight of up to 3000 g/mol,
- from 5 to 70 wt.% of the at least one polyisocyanate and
- from 0.2 to 10 wt.% of the at least one emulsifier,
wherein the mass proportions relate to the total weight of the two-component polyurethane composition.

3. The two-component polyurethane composition according to one of claims 1 to 2, **characterized in that** the emulsifier has a HLB value, according to Griffin, of less than 5.

4. The two-component polyurethane composition according to one of claims 1 to 3, **characterized in that** the at least one polyol has a number-average molecular weight of up to 1000 g/mol, preferably up to 400 g/mol, particularly preferably from 150 to 400 g/mol.

5. The two-component polyurethane composition according to one of claims 1 to 4, **characterized in that** the at least one polyol has a hydroxyl number of more than 100 mg KOH/g, preferably more than 250 mg KOH/g, more preferably more than 400 mg KOH/g, particularly preferably from 500 to 1200 mg KOH/g.

6. The two-component polyurethane composition according to one of claims 1 to 5, **characterized in that** the at least one polyol has an average OH functionality of more than 2.5, preferably from 2.5 to 8, more preferably from 2.8 to 6, particularly preferably from 3 to 5.

7. The two-component polyurethane composition according to one of claims 1 to 6, **characterized in that** the at least one polyol is a polyether polyol or a mixture of polyether polyols.

8. The use of a two-component polyurethane composition according to one of claims 1 to 8 for the production of fiber composite materials.

9. A fiber composite material, **characterized in that** it comprises fibers and a crosslinked two-component polyurethane composition according to one of claims 1 to 8.

10. The fiber composite material according to claim 10, **characterized in that** the crosslinked two-component polyurethane composition is a thermoset.

11. The fiber composite material according to claim 10 or 11, **characterized in that** the crosslinked two-component polyurethane composition has a glass transition temperature T_{G} of above 60 °C, preferably above 100 °C, in particular between 100 °C and 130 °C, determined by DSC according to DIN EN ISO 11357-1/2010-03.

12. The fiber composite material according to one of claims 10 to 12, **characterized in that** the fibers are contained in a proportion by volume of more than 40 vol.%, based on the entire fiber composite material.

13. The use of the fiber composite material according to one of claims 10 to 13 as an automobile part.

14. A method for producing fiber composite materials according to one of claims 10 to 13, **characterized in that** a mold is first filled with fiber materials, and then a two-component polyurethane composition according to one of claims 1 to 12 is introduced into this mold under pressure and/or with a vacuum applied and the fiber composite material is cured at a temperature of up to 140 °C, particularly preferably from 80 to 120 °C.

## Revendications

1. Composition de polyuréthane à deux composants destinée à la fabrication de matières composites renforcées par des fibres, comprenant
- au moins un polyol présentant une masse moléculaire moyenne en nombre allant jusqu'à 3 000 g/mol,
- au moins un polyisocyanate et
- au moins un émulsifiant présentant une valeur HLB selon la méthode de Griffin inférieure à 10, où l'émulsifiant est un produit réactionnel d'au moins un polyol aliphatique et d'au moins un acide monocarboxylique et/ou un acide dicarboxylique aliphatique,
où la composition comprend l'au moins un polyol et l'au moins un polyisocyanate dans un rapport NCO:OH de 2:1 à 1:2, et la transmittance d'un mélange de l'au moins un émulsifiant et de l'au moins un polyol à 860 nm est inférieure à 90 % et où l'au moins un polyisocyanate présente une viscosité inférieure à 80 mPas, mesurée au moyen d'un viscosimètre Brookfield RVT à l'aide d'une broche n° 3 à 25 °C et 50 tr/min, et où 0,5 % en moles à 2,5 % en moles des groupes NCO du polyisocyanate sont transformés en groupes carbodiimide et/ou urétonimine.

2. Composition de polyuréthane à deux composants destinée à la fabrication de matières composites renforcées par des fibres selon la revendication 1, comprenant
- de 10 à 80 % en poids de l'au moins un polyol présentant une masse moléculaire moyenne en nombre allant jusqu'à 3 000 g/mol,
- de 5 à 70 % en poids de l'au moins un polyisocyanate et
- de 0,2 à 10 % en poids de l'au moins un émulsifiant,
où les fractions massiques se rapportent au poids total de la composition de polyuréthane à deux composants.

3. Composition de polyuréthane à deux composants selon l'une des revendications 1 à 2, **caractérisée en ce que** l'émulsifiant présente une valeur HLB selon la méthode de Griffin inférieure à 5.

4. Composition de polyuréthane à deux composants selon l'une quelconque des revendications 1 à 3, **caractérisée en ce que** l'au moins un polyol présente une masse moléculaire moyenne en nombre allant jusqu'à 1 000 g/mol, de préférence jusqu'à 400 g/mol, de manière particulièrement préférée de 150 à 400 g/mol.

5. Composition de polyuréthane à deux composants selon l'une quelconque des revendications 1 à 4, **caractérisée en ce que** l'au moins un polyol présente un indice d'hydroxyle supérieur à 100 mg KOH/g, de préférence supérieur à 250 mg KOH/g, de préférence encore supérieur à 400 mg KOH/g, de manière particulièrement préférée de 500 à 1 200 mg KOH/g.

6. Composition de polyuréthane à deux composants selon l'une quelconque des revendications 1 à 5, **caractérisée en ce que** l'au moins un polyol présente une fonctionnalité OH moyenne supérieure à 2,5, de préférence de 2,5 à 8, de préférence encore de 2,8 à 6, de manière particulièrement préférée de 3 à 5.

7. Composition de polyuréthane à deux composants selon l'une quelconque des revendications 1 à 6, **caractérisée en ce que** l'au moins un polyol est un polyéther polyol ou un mélange de polyéther polyols.

8. Utilisation d'une composition de polyuréthane à deux composants selon l'une quelconque des revendications 1 à 8 destinée à la fabrication de matières composites renforcées par des fibres.

9. Matière composite renforcée par des fibres, **caractérisée en ce qu'**elle comprend des fibres et une composition de polyuréthane à deux composants réticulée selon l'une quelconque des revendications 1 à 8.

10. Matière composite renforcée par des fibres selon la revendication 10, **caractérisée en ce que** la composition de polyuréthane à deux composants réticulée est un thermodurcissable.

11. Matière composite renforcée par des fibres selon la revendication 10 ou 11, **caractérisée en ce que** la composition de polyuréthane à deux composants réticulée présente une température de transition vitreuse Tg supérieure à 60 °C, de préférence supérieure à 100 °C, en particulier comprise entre 100 °C et 130 °C, déterminée par DSC selon la norme DIN EN ISO 11357-1/2010-03.

12. Matière composite renforcée par des fibres selon l'une quelconque des revendications 10 à 12, **caractérisée en ce que** les fibres sont contenues dans une fraction volumique supérieure à 40 % en volume, rapporté à l'ensemble de la matière composite renforcée par des fibres.

13. Utilisation de la matière composite renforcée par des fibres selon l'une quelconque des revendications 10 à 13 comme composant automobile.

14. Procédé de fabrication de matières composites renforcées par des fibres selon l'une quelconque des revendications 10 à 13, **caractérisé en ce qu'**un moule est d'abord rempli de matières fibreuses, puis une composition de polyuréthane à deux composants selon l'une quelconque des revendications 1 à 12 est introduite dans ledit moule sous pression et/ou application de vide et la matière composite renforcée par des fibres est durcie à une température allant jusqu'à 140 °C, de manière particulièrement préférée de 80 à 120 °C.
